# EUROPEAN PATENT APPLICATION

(11) **EP 2 704 510 A1**
(43) Date of publication of application: **05.03.2014**
(21) Application number: 12777469.3
(22) Date of filing: 06.04.2012
(51) Int. Cl.: H04W 72/12, H04W 72/14

(54) **BASE STATION IN MOBILE COMMUNICATION SYSTEM AND RESOURCE ALLOCATION METHOD**

(30) Priority: 25.04.2011 JP 2011097287
(71) Applicant: NTT DOCOMO, INC., Chiyoda-ku Tokyo 100-6150 (JP)
(72) Inventor: UCHINO, Tooru, Tokyo 100-6150 (JP); IWAMURA, Mikio, Tokyo 100-6150 (JP); OFUJI, Yoshiaki, Tokyo 100-6150 (JP); ISHII, Hiroyuki, Tokyo 100-6150 (JP); UMESH, Anil, Tokyo 100-6150 (JP); OOKUBO, Naoto, Tokyo 100-6150 (JP); KIYOSHIMA, Kohei, Tokyo 100-6150 (JP)
(74) Representative: HOFFMANN EITLE
(86) International application number: PCT/JP2012/059601
(87) International publication number: WO 2012/147499

(57) **Abstract**

A base station in a mobile communication system includes a scheduling unit generating downlink grant information indicating that downlink radio resources should be allocated to not more than a first multiplex number of user devices; and a transmission unit transmitting control signals containing the downlink grant information and data signals mapped to the radio resources specified by the downlink grant information, wherein, when less than the first multiplex number and not less than a second multiplex number being less than the first multiplex number, of user devices that receive periodically generated periodic data as data signals exist, and user devices that receive non-periodically generated non-periodic data as data signals exist, the scheduling unit generates downlink grant information indicating that the downlink radio resources should be allocated to the second multiplex number of user devices receiving the periodic data and the user devices receiving the non-periodic data.

## Description

### TECHNICAL FIELD

The present invention relates to a base station and a method for resource allocation.

### BACKGROUND ART

Frequency scheduling is one of the technologies for improving frequency usage efficiency in a mobile communication system. There are two major categories in the frequency scheduling, namely, dynamic scheduling and semi-persistent scheduling (SPS).

In the dynamic scheduling, radio resources are dynamically allocated to users based on data-type associated priorities and radio channel conditions. For example, for each sub-frame of 1 ms TTI (Transmission Timing Interval), it is determined which radio resource should be allocated to which user. In the dynamic scheduling, radio resources are effectively utilized because radio resources, which are allocated to users, can be changed frequently.

In the mean time, there are many different types of data being exchanged by users. There are voice data or voice packets (VOIP), whose data size is small, and whose delay time is required to be short. There are data for data communication, whose data size is big, and whose delay time is not so required to be short. With the voice data (VOIP), small amount of data are generated periodically. When the dynamic scheduling is applied for this kind of voice data, radio resources have to be allocated to each small amount of periodic voice data. In this case, compared to the small amount of the total data being communicated, the signaling overhead required for the resource notification is big. Thus, there is a concern regarding less efficient radio resource utilization.

The semi-persistent scheduling (SPS) is a method for overcoming this kind of concern. In the semi-persistent scheduling, one radio resource allocation is applied not only for a single sub-frame but also for many consecutive sub-frames. In other words, by allocating periodically several radio resources all together at the same time, the signaling overhead for resource allocation can be reduced. Therefore, if all devices in the mobile communication system are semi-persistent scheduling (SPS) capable, then the above concern can be resolved by using the SPS for radio resource allocation for voice data.

However, there can be a case where not all of the devices in the mobile communication system are semi-persistent scheduling (SPS) capable. In such a case, the resource allocation must be based on the dynamic scheduling. Then the radio resources have to be allocated to each small amount of periodic voice data, and the signaling overhead becomes big. And there is a concern regarding less efficient radio resource utilization.

The overhead size varies from one system to another. With a mobile communication system of the Long Term Evolution (LTE) scheme, for every sub-frame of 10 or more OFDM symbols, one, two, or three OFDM symbols are allocated for control signals (PFICH, PHICH, PDCCH, etc.)(the overhead). This kind of overhead varies depending on the number of users in a cell, or depending on the length of the cell radius. The more users there are in a cell, or the larger the data traffic volume is, or the bigger the user multiplex number for one sub-frame is, or the longer the cell radius is, the overhead becomes bigger and causes degraded throughput. The Long Term Evolution (LTE) scheme is described in non-patent document 1.

In a mobile communication system of the LTE scheme, the scheduling is performed for every sub-frame of 1 ms TTI. And together with the control information, which indicates the radio resource allocation (e.g., PDCCH), the data, which are mapped to the resource block indicated by control signals, are sent to a user device. The user device demodulates the control signals to be the control information, and obtains the demodulated data addressed for the user, from the radio resource specified by the control information. In this case, when the number of users, to whom radio resources in one sub-frame can be allocated, is N and the length of the period, in which the voice data are generated, is T, then the number of users for whom voice services can be provided at the same time (i.e., the voice capacity), is N times T. For example, when N=3 people and T=20 ms, then the voice capacity is 3 * 20 = 60 people.

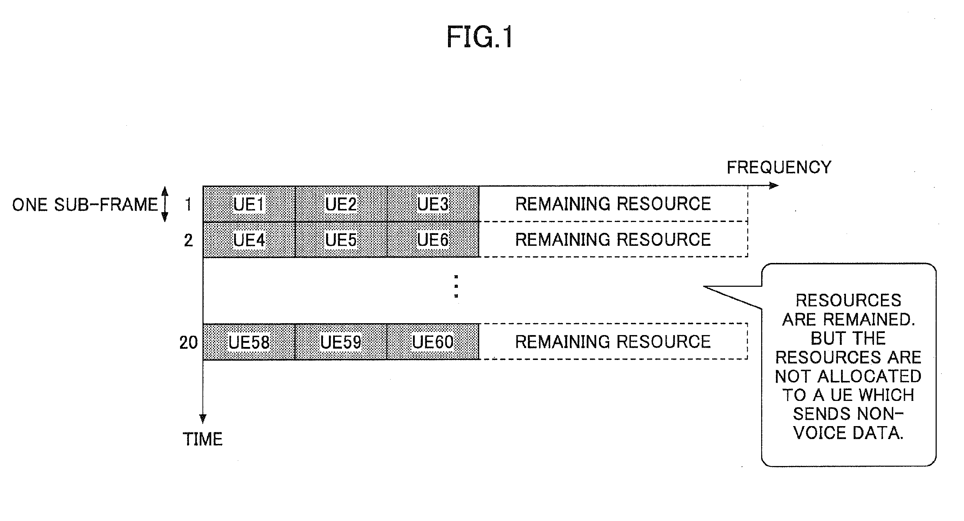

FIG. 1 is a drawing illustrating that radio resources are allocated to various user devices (UE1-UE60) during the time period of 20 ms. As described above, the size of the voice data is small. Therefore, if the downlink radio resources are occupied by the users who have the voice bearers, then there remain some radio resources available but not allocated. As a result, the frequency usage efficiency goes down. Voice data must be sent in real time and have higher priorities compared to non-voice data. Therefore, if the users of the voice data communication and the users of the non-voice data communication are mixed together, then the voice data users get the higher priority for the radio resource allocation. As a result, as shown in FIG. 1, there is a concern that unused radio resources are created and the radio resource usage efficiency goes down. If it is possible to increase the number N of the users to whom radio resources in one sub-frame are allocated, then such a concern would be resolved. But in order to increase the number N, the standard which specifies the downlink signal format has to be changed, which is not easy.

### RELATED ART DOCUMENT

### [NON-PATENT DOCUMENT 1]

3GPP TS36.300 V8.11.0 (2009-12).

### SUMMARY OF THE INVENTION

### PROBLEM TO BE SOLVED BY THE INVENTION

A problem of the present invention is to achieve an efficient usage of downlink radio resources when the radio resources are allocated for data which are generated periodically.

### MEANS FOR SOLVING THE PROBLEM

A base station according to one embodiment of the present invention is a base station in a mobile communication system, including a scheduling unit configured to generate downlink grant information indicating that downlink radio resources are to be allocated to equal to or less than a first multiplex number of user devices; and a transmission unit configured to transmit a control signal containing the downlink grant information and a data signal mapped to the radio resources specified by the downlink grant information, wherein, when less than the first multiplex number, and equal to or more than a second multiplex number, the second multiplex number being less than the first multiplex number, of user devices that receive periodically generated periodic data as a data signal exist, and user devices that receive non-periodically generated non-periodic data as a data signal exist, the scheduling unit generates downlink grant information indicating that the downlink radio resources are to be allocated to the second multiplex number of user devices that receive the periodic data and the user devices that receive the non-periodic data.

### EFFECT OF THE PRESENT INVENTION

According to one embodiment, when the radio resources are allocated for data which are generated periodically, an efficient usage of downlink radio resources can be achieved.

### BRIEF DESCRIPTION OF THE DRAWINGS

FIG. 1 is a drawing illustrating that various user devices are sending voice data during the time period of 20 ms;
FIG. 2 is a drawing illustrating a functional block diagram of a base station used in an embodiment of the present invention;
FIG. 3 is a flowchart illustrating an operational example of the base station;
FIG. 4 is a drawing illustrating an allocation sequence of radio resources; and
FIG. 5 is a drawing illustrating an allocation sequence of radio resources according to a modified embodiment of the present invention.

### EMBODIMENTS FOR CARRYING OUT THE INVENTION

According to an embodiment described below, as a basic rule, a number of multiplexed voice users, who send periodic data such as voice data, cannot exceed a maximum voice user multiplex number, the maximum voice user multiplex number being smaller than a maximum user multiplex number. But when some of the control information resources (PDCCH), which are used for specifying radio resources, still remain unallocated, the number of multiplexed voice users may exceed the maximum voice user multiplex number. By allowing the number of multiplexed voice users to exceed the maximum voice user multiplex number, the frequency usage efficiency improves. The maximum voice user multiplex number can be dynamically changed based on the number of voice users. For example, suppose the maximum user multiplex number is 4. When the traffic is congested, the maximum voice user multiplex number may be 3 and the maximum multiplex number for non-voice data users may be 1. When the traffic is not so congested, the maximum voice user multiplex number may be 2 and the maximum multiplex number for non-voice data users may be 2. For the sake of simplicity, only embodiments using voice data or voice packets are described. But voice data or voice packets are used just as an example. The present embodiment can be applied for any kind of data, as long as the data speed is slow and the data generation is periodic (or occasional). In the present embodiment, there are cases where after allocating the radio resources to the maximum voice user multiplex number of voice users, non-voice users, who send data other than voice, do not exist, or where after allocating radio resources to non-voice users, some radio resources still remain unallocated. In these cases, radio resources are allocated to a number of voice users, the number exceeding the maximum voice user multiplex number.

The present embodiment will be described from the following view points.
1. Base station
2. Operational example of the present embodiment
3. Modified embodiment

### < 1. Base station >

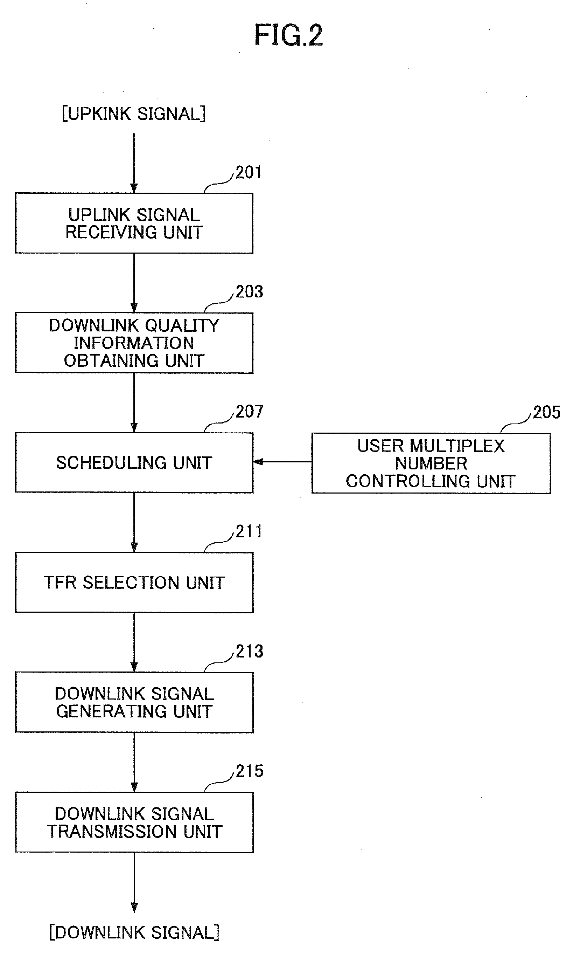

FIG. 2 is a drawing illustrating a functional block diagram of a base station used in an embodiment of the present invention. There are various processing units in a base station of a mobile communication system. The various processing units realize various functions of the base station. Of the various processing units, only those units which are especially related to the present embodiment are shown in FIG. 2. For the sake of convenience, the base station shown in FIG. 2 is a base station for, for example, a mobile communication system of the LTE scheme. The base station can be a base station for a mobile communication system of other schemes. In FIG. 2, an uplink signal receiving unit 201, a downlink quality information obtaining unit 203, a user multiplex number controlling unit 205, a scheduling unit 207, a TFR selection unit 211, a downlink signal generating unit 213, and a downlink signal transmission unit 215 are shown.

The uplink signal receiving unit 201 receives uplink signals from a user device UE, and transforms them into baseband signals. The uplink signal receiving unit 201 includes a filtering function for filtering the received radio signals, a transforming function for transforming analog signals into digital signals, a demodulation function for demodulating the received signals, and a channel decoding function for decoding the received signals. In general, uplink signals include control signals, pilot signals, data signals, etc. The user device UE can be any communication device, or any mobile terminal, or any fixed terminal, as long as it can communicate with the base station through a radio link. The user device UE can be but is not limited to, a mobile telephone, an information terminal, a sophisticated mobile telephone, a smart phone, a tablet computer, a personal digital assistant, a handheld personal computer, etc.

The downlink quality information obtaining unit 203 obtains quality information from uplink signals (UL signals). The quality information indicates a quality status of a downlink radio channel and is included in a control channel. The quality status of a downlink radio channel can be expressed as, for example, a Channel Quality Indicator (CQI) which is derived from the level of the received pilot signals of the user device. The level of the received pilot signals can be expressed in any form known to a person skilled in the art. The level of the received signals may be defined as a radio channel quality indication, regardless for indicating a snap shot quality of the radio channel or indicating an average quality of the radio channel. For example, the level of the received signals may be expressed in the form of a receiving power level, a Received Signal Strength Indicator RSSI, a Received Signal Code Power RSCP, a path loss, an SNR, an SIR, an Ec/No, etc.

The user multiplex number controlling unit 205 controls the maximum voice user multiplex number, N_{VOICE}, which is smaller than the maximum user multiplex number, N_{MAX}, and notifies the scheduling unit 207 of the maximum voice user multiplex number. The maximum user multiplex number, N_{MAX}, is a maximum number of user devices which can receive data out of the same single downlink sub-frame. The maximum voice user multiplex number, N_{VOICE}, is a maximum number of user devices which can receive periodic data out of the same single downlink sub-frame. The periodic data is data which are generated periodically. A typical example of the periodic data is voice data. For the sake of simplicity, a case where a user sends and receives voice data is described as an example in the following discussion. The present embodiment is not limited to the case of the voice data, but can be applied to any case where periodically (or, occasionally) generated signals are sent and received. For example, the present embodiment can be applied to a case where PING signals, which are used for checking for good connectivity of the communication, are sent and received periodically. While the maximum user multiplex number, N_{MAX}, is maintained to be a constant value, the maximum voice user multiplex number, N_{VOICE}, can be controlled to be variable or constant. For example, in the case where N_{VOICE} is controlled to be variable, the maximum user multiplex number, N_{MAX}, is four and the maximum voice user multiplex number, N_{VOICE}, can be controlled to be 3, 2, or 1, depending on the number of users who send and receive voice data in a certain cell (When there are a large number of voice data communicating users, the maximum voice user multiplex number, N_{VOICE}, can be three. When there are a small number of voice data communicating users, the maximum voice user multiplex number, N_{VOICE}, can be one.) The numbers for the maximum user multiplex number, N_{MAX}, and the numbers for the maximum voice user multiplex number, N_{VOICE}, described above, are just examples. Instead of using N_{MAX} and N_{VOICE}, other types of indices can be used. For example, a per control cannel element usage rate, the control channel element forming a DL control channel, may be used. Further, the maximum voice user multiplex number, N_{VOICE}, can be controlled, not only based on the number of voice users, but also based on other parameters such as traffic volume. The other parameters can be, but are not limited to, (1) a number of users in a cell, (2) a number of voice bearers in a cell, (3) a number of bearers, for which the semi-persistent scheduling is applied in a cell, (4) a number of data bearers in a cell, (5) a number of connected state of UEs (i.e., a number of UEs in a RRC_CONNECTED state), (6) a number of emergency calls in a cell, (7) a number of priority calls in a cell, (8) a restriction rate in a cell, (9) a resource usage rate (Here, the resource usage rate means, for example, a radio resource usage rate, a baseband processing circuit usage rate, a CPU usage rate, etc.), and (10) a number of, or a rate of, UEs in a cell, which are capable of voice communication.

The number of voice data communicating users can be a number of users, for whom a voice bearer is set, or can be a number of voice bearer users who are in the talk spurt period. In general, when a person is talking on the phone, two periods, a talk spurt period, in which voice data are generated, and a silent period, take place one after the other. In the talk spurt period, periodic voice data are generated at a certain time interval, for example, 20 ms.

The scheduling unit 207 calculates a scheduling factor for users (user devices) who have data to communicate. The scheduling unit 207 allocates the downlink radio resources to user devices based on Logical Channel Priority (LCP) and a scheduling factor. The scheduling factor can be calculated in any way, as long as it is based on an existence or a non-existence of a scheduling request, a Logical Channel Priority LCP, a snap-shot data rate, an average data rate, etc. The Logical Channel Priority LCP is a priority corresponding to a specific logical channel, to which a specific type of data is mapped. For example, a priority of an LCP which corresponds to voice communication type of data, is higher than a priority of an LCP which corresponds to data communication type of data. The scheduling factor can be calculated using, for example, the Max C/I algorithm, or a Proportional Fairness algorithm.

The base station is notified, from the core network, of a Quality of Service Class Indicator (QCI) for data the user communicates. The QCI indicates a priority of a traffic type. The base station multiplies the user's scheduling factor by the factor corresponding to the QCI, in order to make the scheduling factor correspond to the QCI priority. By changing a parameter, which is used for calculating the scheduling factor, based on the QCI, it is possible to control, for example, a scheduling frequency based on the QCI. The scheduling is conducted based on several LCPs corresponding to the QCIs. When a user has both the data belonging to a low priority LCP and the data belonging to a high priority LCP, the radio resources are to be allocated first to the data belonging to the high priority LCP.

The scheduling unit 207 allocates the radio resources to users, giving high priorities to a user whose scheduling factor is relatively big (or, whose priority is relatively high). A user device is notified of the allocation of downlink radio resources by control signals as downlink grant information. The detailed operational description will be provided later, but the general idea is that the scheduling unit 207 allocates the radio resources to the voice user multiplex number N_{VOICE}, of user devices which receive voice data, and to one or more user devices which send non-periodic data, when equal or more than the voice user multiplex number N_{VOICE} of user devices which receive voice data exist, and user devices which receive non-periodic data of non-voice data exist.

The TFR (Transport Format and Resource) selection unit 211 determines a transport format (a data modulation scheme and a channel coding rate) and a resource block for a user device to which radio resources are to be allocated, based on the instruction from the scheduling unit 207.

The downlink signal generating unit 213 generates downlink signals including control signals and data signals. The control signals indicate how radio resources are allocated to user devices. In the mobile communication system of the LTE scheme, the control signals include, at least, a Physical Downlink Control Channel PDCCH. To be more precise, the control signals include not only a PDCCH, but also a Physical Control Format Indicator Channel PCFICH, which informs about the number of OFDM symbols used for the PDCCHs, a Hybrid ARQ Indicator Channel PHICH, which carries ACK or NAK response to uplink data signals (PUSCHs) received by the base station, etc. The control signals in the present embodiment include uplink/downlink grant information. The uplink/downlink grant information includes information such as identifications of users to whom radio resources are allocated, resource blocks allocated for uplink or downlink, data formats (data modulation schemes and channel coding rates), etc. Data signals are mapped to the resource blocks which are specified by the control signals. The data signals include user data including, in general, voice data (VoIP), real time data, data for data communication, etc. In the mobile communication system of the LTE scheme, data signals correspond to a Physical Downlink Shared Channel PDSCH, and a Physical Uplink Shared Channel PUSCH.

The downlink signal transmission unit 215 transmits downlink signals generated by the downlink signal generating unit 213. The downlink signal transmission unit 215 includes a channel coding function for transmission data, a modulation function for transmission data, a transforming function for transforming digital signals to analog signals, a filtering function for transmission signals, an amplifying function for transmission signals, etc.

### < 2. Operational example of the present embodiment >

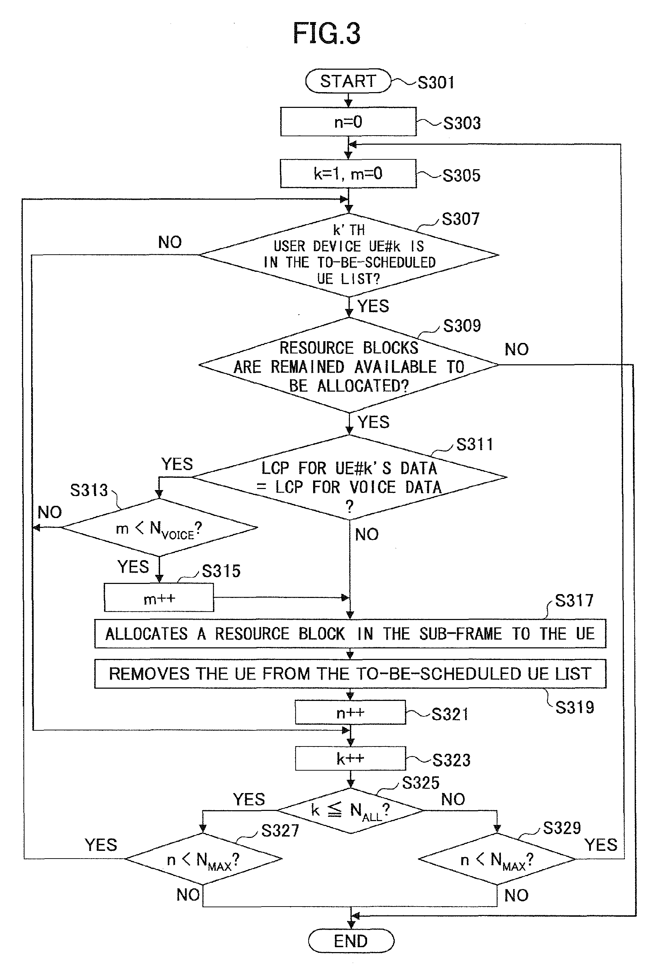

FIG. 3 is a flowchart illustrating an operational example of a base station shown in FIG. 2. The flow starts from step S301, and moves to step S303.

In steps S303 and S305, various parameters are initialized. More specifically, n is set to zero (0), where n represents a number of users whom the radio resources have been actually allocated to. N_{ALL} represents the total number of users to be scheduled. A number of N_{ALL} users are lined up in the order of the scheduling factor. A parameter k is set to one (1), where k specifies the users one by one from the users lined up in the order of the scheduling factor; m is set to zero (0), where m represents a number of voice users whom the radio resources have been actually allocated to. The voice users are those users who send voice data. For the sake of convenience, it is assumed that a total of 10 user devices, UE#1, UE#2, ... , UE#10, are to be scheduled (N_{ALL} = 10). The total 6 user devices, UE#1-6, communicate voice data. Remaining 4 user devices, UE#7-10, communicate non-voice data.
UE#1-6: User devices which send voice data
UE#7-10: User devices which send non-voice data

It is assumed that the maximum user multiplex number N_{MAX}, which is a maximum number of user devices which can send data in the same single downlink sub-frame, is five (5). The maximum voice user multiplex number N_{VOICE}, which is a maximum number of user devices which can send periodic data in the same single downlink sub-frame, is two (2). At this point, the value of each parameter is as follows.

The maximum user multiplex number: N_{MAX} =5

The maximum voice user multiplex number: N_{VOICE} =2

The total number of users to be scheduled: N_{ALL} =10

The number of voice users whom the radio resources have been actually allocated to: m=0

The number of users whom the radio resources have been actually allocated to: n=0

The parameter for specifying a user: k=1

In step S307, the base station determines whether the k'th user device UE#k is a user device to be scheduled. If the user device UE#k is a user device to be scheduled, then the flow moves to step S309. If the user device UE#k is not a user device to be scheduled, then the flow moves to step S323. In the current example, k=1. Because the first user device UE#1 is a user device to be scheduled, the flow moves to step S309.

In step S309, the base station determines whether there are radio resources (resource blocks) remaining available to be allocated to user devices. If there are radio resources remaining, then the flow moves to step S311. If there are no radio resources remaining, then the flow moves to step S331, and the flow ends.

In step S311, the base station determines whether the Logical Channel Priority LCP, for the data to be sent by the user device UE#1, is a LCP for voice data (more in general, for periodic data). If the LCP is for voice data, then the flow moves to step S313. If the LCP is not for voice data, then the flow moves to step S317. In the current example, the flow moves to step S313 because the data to be received by the user device UE#1 is voice data.

In step S313, the base station determines whether m (the number of voice users whom the radio resources have been actually allocated to) is less than N_{VOICE} =2 (the maximum voice user multiplex number). If m is less than N_{VOICE}, then the flow moves to step S315. If m is not less than N_{VOICE}, then the flow moves to step S323. In the current example, the flow moves to step S315 because m=0.

In step S315, m (the number of voice users whom the radio resources have been actually allocated to) is incremented. As a result, m=1.

In step S317, the base station determines the radio resources (resource blocks) in the target sub-frame to be allocated to the user device UE#1, and the transport format (the data modulation scheme and the channel coding rate) to be used.

In step S319, the base station removes the user device UE#1 from the to-be-scheduled UE list. In the current example, the user devices in the to-be-scheduled UE list are UE#1, UE#2, UE#3, UE#4, UE#5, UE#6, UE#7, UE#8, UE#9, and UE#10. From this list, UE#1 is removed. As a result, remaining user devices in the to-be-scheduled UE list are UE#2, UE#3, UE#4, UE#5, UE#6, UE#7, UE#8, UE#9, and UE#10.

In step S321, n (the number of users whom the radio resources have been actually allocated to) is incremented. As a result, n=1.

In step S323, k (the parameter for specifying a user) is incremented. As a result, k=2.

In step S325, the base station determines whether k (the parameter for specifying a user) is equal or less than the N_{ALL} (the total number of users to be scheduled). If k is equal or less than N_{ALL}, then the flow moves to S327. If k is not equal or less than N_{ALL}, then the flow moves to S329. In the current example, the flow moves to step S327 because k=2< N_{ALL} =10.

In step S327, the base station determines whether n (the number of users whom the radio resources have been actually allocated to) is less than N_{MAX} (the maximum user multiplex number). If n is less than N_{MAX}, then the flow moves to step S307. If n is not less than N_{MAX}, then the flow moves to step S331 and the flow ends. In the current example, the flow returns to step S307 because n=1< N_{MAX} =5. At this point, the value of each parameter is as follows.

The maximum user multiplex number: N_{MAX} =5

The maximum voice user multiplex number: N_{VOICE} =2

The total number of users to be scheduled: N_{ALL} =10

The number of voice users whom the radio resources have been actually allocated to: m=1

The number of users whom the radio resources have been actually allocated to: n=1

The parameter for specifying a user: k=2

In step S307, the base station determines whether the k'th user device UE#k is a user device to be scheduled. In the current example, k=2. Because the second user device UE#2 is a user device to be scheduled, the flow moves to step S309.

In step S309, the base station determines whether there are radio resources (resource blocks) remaining available to be allocated to user devices.

In step S311, the base station determines whether the Logical Channel Priority LCP for the data to be sent by the user device UE#2 is a LCP for voice data (more in general, for periodic data). In the current example, the flow moves to step S313 because the data to be received by the user device UE#2 is voice data.

In step S313, the base station determines whether m (the number of voice users whom the radio resources have been actually allocated to) is less than N_{VOICE} =2 (the maximum voice user multiplex number). In the current example, the flow moves to step S315 because m=1.

In step S315, m (the number of voice users whom the radio resources have been actually allocated to) is incremented. As a result, m=2.

In step S317, the base station determines the radio resources (resource blocks) in the target sub-frame to be allocated to the user device UE#2, and the transport format (the data modulation scheme and the channel coding rate) to be used.

In step S319, the base station removes the user device UE#2 from the to-be-scheduled UE list. As a result, remaining user devices in the to-be-scheduled UE list are UE#3, UE#4, UE#5, UE#6, UE#7, UE#8, UE#9, and UE#10.

In step S321, n (the number of users whom the radio resources have been actually allocated to) is incremented. As a result, n=2.

In step S323, k (the parameter for specifying a user) is incremented. As a result, k=3.

In step S325, the base station determines whether k (the parameter for specifying a user) is equal or less than N_{ALL} (the total number of users to be scheduled). In the current example, the flow moves to step S327 because k=3< N_{ALL} =10.

In step S327, the base station determines whether n (the number of users whom the radio resources have been actually allocated to) is less than N_{MAX} (the maximum user multiplex number). In the current example, the flow returns to step S307 because n=2< N_{MAX} =5. At this point, the value of each parameter is as follows.

The maximum user multiplex number: N_{MAX} =5

The maximum voice user multiplex number: N_{VOICE} =2

The total number of users to be scheduled: N_{ALL} =10

The number of voice users whom the radio resources have been actually allocated to: m=2

The number of users whom the radio resources have been actually allocated to: n=2

The parameter for specifying a user: k=3

In step S307, the base station determines whether the k'th user device UE#k is a user device to be scheduled. In the current example, k=3. Because the third user device UE#3 is a user device to be scheduled, the flow moves to step S309.

In step S309, the base station determines whether there are radio resources (resource blocks) remained available to be allocated to user devices.

In step S311, the base station determines whether the Logical Channel Priority LCP for the data to be sent by the user device UE#2 is a LCP for voice data (more in general, for periodic data). In the current example, the flow moves to step S313 because the data to be received by the user device UE#3 is voice data.

In step S313, the base station determines whether m (the number of voice users whom the radio resources have been actually allocated to) is less than N_{VOICE} =2 (the maximum voice user multiplex number). In the current example, the flow moves to, different from the previous case, step S323 because m=2.

In step S323, k (the parameter for specifying a user) is incremented. As a result, k=4.

In step S325, the base station determines whether k (the parameter for specifying a user) is equal or less than N_{ALL} (the total number of users to be scheduled). In the current example, the flow moves to step S327 because k=4< N_{ALL} =10.

In step S327, the base station determines whether n (the number of users whom the radio resources have been actually allocated to) is less than N_{MAX} (the maximum user multiplex number). In the current example, the flow returns to step S307 because n=2< N_{MAX} =5. At this point, the value of each parameter is as follows.

The maximum user multiplex number: N_{MAX} =5

The maximum voice user multiplex number: N_{VOICE} =2

The total number of users to be scheduled: N_{ALL} =10

The number of voice users whom the radio resources have been actually allocated to: m=2

The number of users whom the radio resources have been actually allocated to: n=2

The parameter for specifying a user: k=4 As is shown above, only k, which is the parameter for specifying a user, is increased, and m (the number of voice users whom the radio resources have been actually allocated to) and n (the number of users whom the radio resources have been actually allocated to) are not changed.

Because the user devices UE#4-6, which correspond to the parameter k=4,5,6, communicate voice data, the flow moves from step S311 to S313. And because m (the number of voice users whom the radio resources have been actually allocated to) has already reached to 2, the flow moves from step S313 to S323, and the parameter k is incremented. In step S325, the base station determines whether k (the parameter for specifying a user) is equal or less than the N_{ALL} (the total number of users to be scheduled). When k=4, 5, or 6, the flow moves to step S327 because 4, 5, or 6 is less than N_{ALL} (=10). In step S327, the base station determines whether n (the number of users whom the radio resources have been actually allocated to) is less than N_{MAX} (the maximum user multiplex number). In the current example, the flow returns to step S307 because n=2< N_{MAX} =5. This way, only k (the parameter for specifying a user) is incremented to 4, 5, 6, and 7, and the flow returns to step S307. As a result, the value of each parameter becomes as follows.

The maximum user multiplex number: N_{MAX} =5

The maximum voice user multiplex number: N_{VOICE} =2

The total number of users to be scheduled: N_{ALL} =10

The number of voice users whom the radio resources have been actually allocated to: m=2

The number of users whom the radio resources have been actually allocated to: n=2

The parameter for specifying a user: k=7

In step S307, the base station determines whether the k'th user device UE#k is a user device to be scheduled. In the current example, k=7. Because the seventh user device UE#7 is a user device to be scheduled, the flow moves to step S309.

In step S309, the base station determines whether there are radio resources (resource blocks) remaining available to be allocated to user devices.

In step S311, the base station determines whether the Logical Channel Priority LCP for the data to be sent by the user device UE#7 is a LCP for voice data (more in general, for periodic data). In the current example, the flow moves not to S313 but to S317, because the data to be received by the user device UE#7 is non-voice data.

In step S317, the base station determines the radio resources (resource blocks), in the target sub-frame, to be allocated to the user device UE#7, and the transport format (the data modulation scheme and the channel coding rate) to be used.

In step S319, the base station removes the user device UE#7 from the to-be-scheduled UE list. As a result, remaining user devices in the to-be-scheduled UE list are UE#3, UE#4, UE#5, UE#6, UE#8, UE#9, and UE#10.

In step S321, n (the number of users whom the radio resources have been actually allocated to) is incremented. As a result, n=3.

In step S323, k (the parameter for specifying a user) is incremented. As a result, k=8.

In step S325, the base station determines whether k (the parameter for specifying a user) is equal or less than the N_{ALL} (the total number of users to be scheduled). In the current example, the flow moves to step S327 because k=8< N_{ALL} =10.

In step S327, the base station determines whether n (the number of users whom the radio resources have been actually allocated to) is less than N_{MAX} (the maximum user multiplex number). In the current example, the flow returns to step S307 because n=3< N_{MAX} =5. At this point, the value of each parameter is as follows.

The maximum user multiplex number: N_{MAX} =5

The maximum voice user multiplex number: N_{VOICE} =2

The total number of users to be scheduled: N_{ALL} =10

The number of voice users whom the radio resources have been actually allocated to: m=2

The number of users whom the radio resources have been actually allocated to: n=3

The parameter for specifying a user: k=8 In step S307, the base station determines whether the k'th user device UE#k is a user device to be scheduled. In the current example, k=8. Because the eighth user device UE#8 is a user device to be scheduled, the flow moves to step S309.

In step S309, the base station determines whether there are radio resources (resource blocks) remaining available to be allocated to user devices.

In step S311, the base station determines whether the Logical Channel Priority LCP for the data to be sent by the user device UE#8 is a LCP for voice data (more in general, for periodic data). In the current example, the flow moves to S317 because the data to be received by the user device UE#8 is non-voice data.

In step S317, the base station determines the radio resources (resource blocks) in the target sub-frame to be allocated to the user device UE#8, and the transport format (the data modulation scheme and the channel coding rate) to be used.

In step S319, the base station removes the user device UE#8 from the to-be-scheduled UE list. As a result, remaining user devices in the to-be-scheduled UE list are UE#3, UE#4, UE#5, UE#6, UE#9, and UE#10.

In step S321, n (the number of users whom the radio resources have been actually allocated to) is incremented. As a result, n=4.

In step S323, k (the parameter for specifying a user) is incremented. As a result, k=9.

In step S325, the base station determines whether k (the parameter for specifying a user) is equal or less than N_{ALL} (the total number of users to be scheduled). In the current example, the flow moves to step S327 because k=9< N_{ALL} =10.

In step S327, the base station determines whether n (the number of users whom the radio resources have been actually allocated to) is less than N_{MAX} (the maximum user multiplex number). In the current example, the flow returns to step S307 because n=4< N_{MAX} =5. At this point, the value of each parameter is as follows.

The maximum user multiplex number: N_{MAX} =5 The maximum voice user multiplex number: N_{VOICE} =2

The total number of users to be scheduled: N_{ALL} =10

The number of voice users whom the radio resources have been actually allocated to: m=2

The number of users whom the radio resources have been actually allocated to: n=4

The parameter for specifying a user: k=9

In step S307, the base station determines whether the k'th user device UE#k is a user device to be scheduled. In the current example, k=9. Because the eighth user device UE#9 is a user device to be scheduled, the flow moves to step S309.

In step S309, the base station determines whether there are radio resources (resource blocks) remaining available to be allocated to user devices.

In step S311, the base station determines whether the Logical Channel Priority LCP for the data to be sent by the user device UE#9 is a LCP for voice data (more in general, for periodic data). In the current example, the flow moves to S317 because the data to be received by the user device UE#9 is non-voice data.

In step S317, the base station determines the radio resources (resource blocks) in the target sub-frame to be allocated to the user device UE#9, and the transport format (the data modulation scheme and the channel coding rate) to be used.

In step S319, the base station removes the user device UE#9 from the to-be-scheduled UE list. As a result, remaining user devices in the to-be-scheduled UE list are UE#3, UE#4, UE#5, UE#6, and UE#10.

In step S321, n (the number of users whom the radio resources have been actually allocated to) is incremented. As a result, n=5.

In step S323, k (the parameter for specifying a user) is incremented. As a result, k=10.

In step S325, the base station determines whether k (the parameter for specifying a user) is equal or less than N_{ALL} (the total number of users to be scheduled). If k is equal or less than N_{ALL}, then the flow moves to S327. If k is not equal or less than N_{ALL}, then the flow moves to S329. In the current example, the flow moves to step S327 because k=10= N_{ALL}.

In step S327, the base station determines whether n (the number of users whom the radio resources have been actually allocated to) is less than N_{MAX} (the maximum user multiplex number). In the current example, the flow moves to step S331 and the flow ends because n=5= N_{MAX}.

As a result, the base station generates downlink grant information which indicates that the radio resources are allocated to the user device UE#1 (voice user), the user device UE#2 (voice user), the user device UE#7 (non-voice user), the user device UE#8 (non-voice user), and the user device UE#9 (non-voice user). The base station generates the downlink signals which include control signals containing downlink grant information and data signals (voice data or non-voice data) mapped to the radio resources specified by the downlink grant information. The base station sends the downlink signals to the user devices. The user device demodulates the control signals, and determines whether the radio resources are allocated to it. When the radio resources are allocated to it, the user device demodulates the data signals for the user device from the radio resources specified by the downlink grant information.

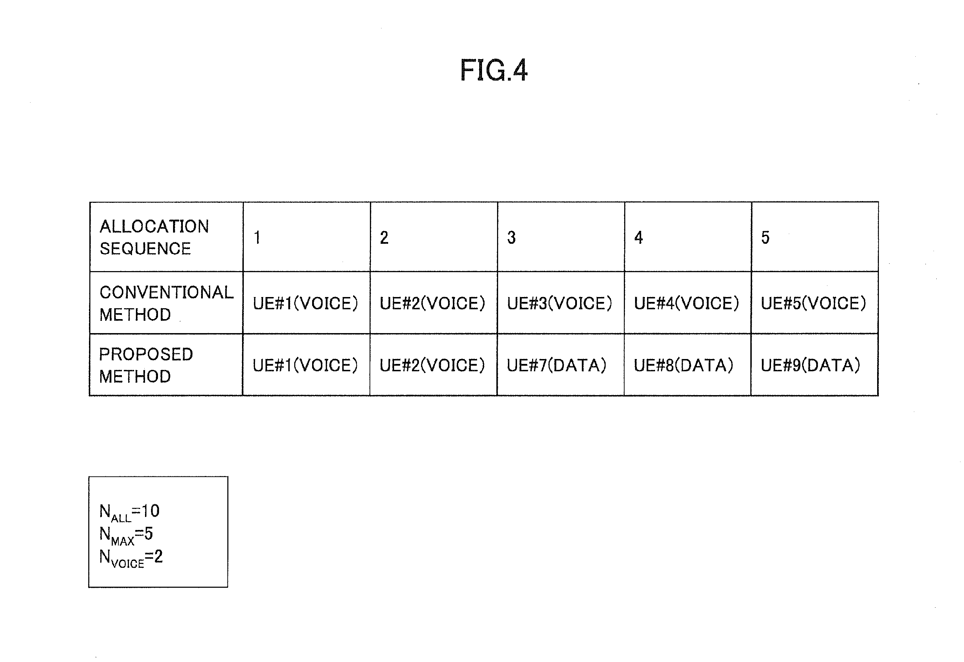

FIG. 4 is a drawing illustrating the allocation sequence (proposed sequence) of radio resources described above. For the sake of comparison, the radio resources allocation sequence based on the conventional method is also shown in FIG. 4. With the conventional method, user devices are selected just based on the priority. As a result, the radio resources are simply allocated to a number of user devices UE#1-5, the number being the same as the maximum user multiplex number N_{MAX}. The user devices UE#1-5 communicate voice data, and the size of voice data is small. As a result, some of the downlink radio resources remain unused, and there is a concern that the frequency usage efficiency goes down. On the other hand, with the proposed method, even when there are more than N_{VOICE} (the maximum voice user multiplex number=2) of voice user devices, the multiplex user number for voice user in one sub-frame is limited to N_{VOICE} (the maximum voice user multiplex number=2). And the remaining radio resources are allocated to the user devices UE#7-9 which send non-voice data. The non-voice data are, for example, data for data communication, which tend to have larger data size compared to voice data. By limiting the number of voice user devices to less than N_{MAX} (the maximum user multiplex number), the efficiency of the downlink radio resources usage can be improved.

### <3. Modified embodiment>

In the above operational example, in step S325, n (the number of users whom the radio resources have been actually allocated to) has reached N_{MAX} (the maximum user multiplex number) and the flow has ended before k (the parameter for specifying a user) becomes bigger than N_{ALL} (the total number of users to be scheduled). As a result, the radio resources are allocated to the two user devices of UE#1, UE#2, which receive voice data, and the three user devices of UE#7, UE#8, and UE#9, which send non-voice data. But sometimes, there could be a case where n (the number of users whom the radio resources have been actually allocated to) has not reached N_{MAX} (the maximum user multiplex number) and the radio resources are still available to be allocated when k (the parameter for specifying a user) becomes bigger than N_{ALL} (the total number of users to be scheduled). In the modified example, in a case just described above, the base station allocates the radio resources to more than the number of N_{MAX} (the maximum user multiplex number) voice users.

The operation of a modified example is described using the flowchart illustrated in FIG. 3. For the sake of convenience, it is assumed that the total 7 user devices, UE#1, UE#2, ... , UE#7, are to be scheduled (N_{ALL} = 7). The total 6 user devices, UE#1-6, communicate voice data. Remaining one user device, UE#7 communicates non-voice data.
UE#1-6: User devices which send voice data
UE#7: User devices which send non-voice data

In other word, this modified example can be defined as a case where user devices UE#8-10 don't exist in the previous example. It is also assumed that N_{MAX} (the maximum user multiplex number) is five (5), and N_{VOICE} (the maximum voice user multiplex number) is two (2).

After the similar operation to the previous example, the radio resources are allocated to the user devices UE#1 and UE#2, which corresponds to k=1,2. The radio resources are not allocated to the user devices UE#3, UE#4, UE#5 and UE#6, which correspond to k=3,4,5,6. And the radio resources are allocated to the user device UE#7, which corresponds to k=7 (step S317). As a result, the remaining user devices in the to-be-scheduled UE list are UE#3, UE#4, UE#5 and UE#6 (step S319). Then, the parameter k reaches 8 (step S323). The flow moves to step S325. At this point, the value of each parameter is as follows.

The maximum user multiplex number: N_{MAX} =5

The maximum voice user multiplex number: N_{VOICE} =2

The total number of users to be scheduled: N_{ALL} =7

The number of voice users whom the radio resources have been actually allocated to: m=2

The number of users whom the radio resources have been actually allocated to: n=3

The parameter for specifying a user: k=8

So far, operations are similar to those of the previous example. But the user devices remaining in the to-be-scheduled UE list are different from the previous example.

In step S325, the base station determines whether k (the parameter for specifying a user) is equal or less than N_{ALL} (the total number of users to be scheduled). If k is equal or less than N_{ALL}, then the flow moves to S327. If k is not equal or less than N_{ALL}, then the flow moves to S329. In the current example, the flow moves to step S329 because k=8 and k is not equal or less than N_{ALL} =7.

In step S329, the base station determines whether n (the number of users whom the radio resources have been actually allocated to) is less than N_{MAX} (the maximum user multiplex number). If n is less than N_{MAX}, then the flow returns to step S305. If n is not less than N_{MAX}, then the flow moves to step S331 and the flow ends. In the current example, the flow moves to step S305 because n=3< N_{MAX} =5.

In step S305, k (the parameter for specifying a user) is set to one (1), m (the number of voice users whom the radio resources have been actually allocated to) is set to zero (0). In the current example, the remaining user devices in the to-be-scheduled UE list are UE#3, UE#4, UE#5 and UE#6. So, k=1, 2, 3, and 4 correspond to the user devices UE#3, UE#4, UE#5 and UE#6. At this point,

The maximum user multiplex number: N_{MAX} =5

The maximum voice user multiplex number: N_{VOICE} =2

The total number of users to be scheduled: N_{ALL} =7

The number of voice users whom the radio resources have been actually allocated to: m=0

The number of users whom the radio resources have been actually allocated to: n=3

The parameter for specifying a user: k=1

In step S307, the base station determines whether the k'th user device UE#k is a user device to be scheduled. In the current example, the first user device UE#3 is a user device to be scheduled, so the flow moves to step S309.

In step S309, the base station determines whether there are radio resources (resource blocks) remaining available to be allocated to user devices.

In step S311, the base station determines whether the Logical Channel Priority LCP for the data to be sent by the user device UE#3 is a LCP for voice data (more in general, for periodic data). In the current example, the flow moves to S313 because the data to be received by the user device UE#3 is voice data.

In step S313, the base station determines whether m (the number of voice users whom the radio resources have been actually allocated to) is less than N_{VOICE} =2 (the maximum voice user multiplex number). In the current example, the flow moves to step S315 because m=0.

In step S315, m (the number of voice users whom the radio resources have been actually allocated to) is incremented. As a result, m=1.

In step S317, the base station determines the radio resources (resource blocks) in the target sub-frame to be allocated to the user device UE#3, and the transport format (the data modulation scheme and the channel coding rate) to be used.

In step S319, the base station removes the user device UE#3 from the to-be-scheduled UE list. As a result, remaining user devices in the to-be-scheduled UE list are UE#4, UE#5 and UE#6.

In step S321, n (the number of users whom the radio resources have been actually allocated to) is incremented. As a result, n=4.

In step S323, k (the parameter for specifying a user) is incremented. As a result, k=2.

In step S325, the base station determines whether k (the parameter for specifying a user) is equal or less than N_{ALL} (the total number of users to be scheduled). In the current example, the flow moves to step S327 because k=2< N_{ALL} =7.

In step S327, the base station determines whether n (the number of users whom the radio resources have been actually allocated to) is less than N_{MAX} (the maximum user multiplex number). In the current example, the flow returns to step S307 because n=4< N_{MAX} =5. At this point, the value of each parameter is as follows.

The maximum user multiplex number: N_{MAX} =5

The maximum voice user multiplex number: N_{VOICE} =2

The total number of users to be scheduled: N_{ALL} =7

The number of voice users whom the radio resources have been actually allocated to: m=1

The number of users whom the radio resources have been actually allocated to: n=4

The parameter for specifying a user: k=2

In step S307, the base station determines whether the k'th user device UE#k is a user device to be scheduled. In the current example, k=2. Because the second user device UE#4 is a user device to be scheduled, the flow moves to step S309.

In step S309, the base station determines whether there are radio resources (resource blocks) remaining available to be allocated to user devices.

In step S311, the base station determines whether the Logical Channel Priority LCP for the data to be sent by the user device UE#4 is a LCP for voice data (more in general, for periodic data). In the current example, the flow moves to step S313 because the data to be received by the user device UE#4 is voice data.

In step S313, the base station determines whether m (the number of voice users whom the radio resources have been actually allocated to) is less than the N_{VOICE} =2 (the maximum voice user multiplex number). In the current example, the flow moves to step S315 because m=1.

In step S315, m (the number of voice users whom the radio resources have been actually allocated to) is incremented. As a result, m=2.

In step S317, the base station determines the radio resources (resource blocks) in the target sub-frame to be allocated to the user device UE#4, and the transport format (the data modulation scheme and the channel coding rate) to be used.

In step S319, the base station removes the user device UE#4 from the to-be-scheduled UE list. In the current example, the user devices in the to-be-scheduled UE list are UE#5 and UE#6.

In step S321, n (the number of users whom the radio resources have been actually allocated to) is incremented. As a result, n=5.

In step S323, k (the parameter for specifying a user) is incremented. As a result, k=3.

In step S325, the base station determines whether k (the parameter for specifying a user) is equal or less than N_{ALL} (the total number of users to be scheduled). In the current example, the flow moves to step S327 because k=3< N_{ALL} =7.

In step S327, the base station determines whether n (the number of users whom the radio resources have been actually allocated to) is less than N_{MAX} (the maximum user multiplex number). In the current example, the flow moves to step S331 and the flow ends because n=5= N_{MAX}.

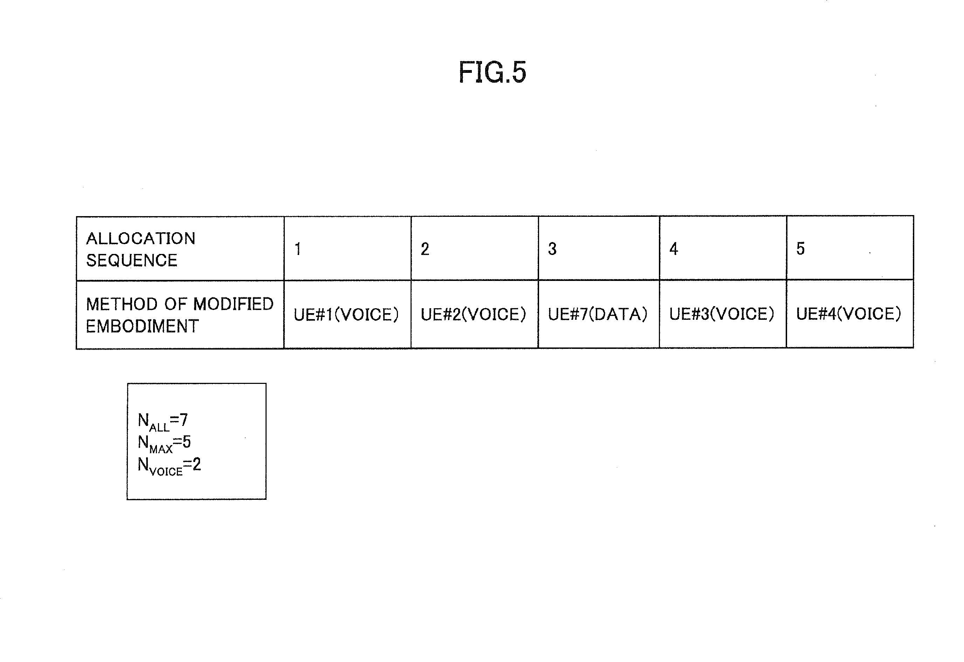

FIG. 5 is a drawing illustrating the allocation sequence of radio resources according to the modified embodiment of the present invention. In the modified example, limiting the voice user multiplex number to equal or less than the maximum voice user multiplex number, N_{VOICE} =2. the radio resources are allocated to the users. If any radio resources are still remaining after the radio resource allocation, then the remaining radio resources are allocated to voice users. As a result, the radio resources are allocated to the user devices UE#1 and UE#2 which communicate voice data, to the user device UE#7 which communicates non-voice data, and further to the user devices UE#3 and UE#4 which communicate voice data. According to the modified example, the radio resources usage efficiency can be improved further.

As described above, the present invention is described referring to specific embodiments. These embodiments are described just as examples. A person skilled in the art would easily understand various modified embodiments, amended embodiments and replacement embodiments. For example, the present invention can be applied to any kind of mobile communication systems, in which voice data are sent and received. For example, voice data are used in the present embodiments for the sake of easy understanding. But the voice data are used just as an example, and any kind of data (regardless of periodic data or non-periodic data), unless otherwise noted, can be used. For example, specific numbers are used in the present embodiments for the sake of easy understanding. But those numbers are used just as examples, and, unless otherwise noted, any number can be used. For example, the user multiplex number for users who have voice data in one sub-frame is used in the present embodiments, but is used just as an example. And any type of index number to limit the resource allocation for users having certain data in one sub-frame, unless otherwise noted, can be used. Specific mathematical expressions are used in the present embodiments for the sake of easy understanding, but are used just as examples. Any kind of mathematical expressions, unless otherwise noted, can be used. Dividing the description of present embodiments into some parts or sections is not essential for the present invention. Things described in the divided parts or sections can be freely combined if necessary, or one thing described in one part or section can be applied to a different part or section, as long as it makes sense. For the sake of convenience, devices of the present embodiments are described using a functional block diagram. Those devices can be realized as hardware, software, or combination of both. The software can be provided in a random access memory (RAM), a Flash memory, a read only memory (ROM), an EPROM, an EEPROM, a register, a hard disk (HDD), a removable disk, a CD-ROM, a database, a server, or any other memory media. The present invention is not limited to these embodiments, but various variations and modifications may be made without departing from the spirit of the present invention.

The present application is based on and claims the benefit of priority of Japanese Priority Application No.2011-097287 filed on April 25, 2011 the entire contents of which are hereby incorporated by reference.

## Claims

1. A base station in a mobile communication system, comprising:
a scheduling unit configured to generate downlink grant information indicating that downlink radio resources are to be allocated to equal to or less than a first multiplex number of user devices; and
a transmission unit configured to transmit a control signal containing the downlink grant information and a data signal mapped to the radio resources specified by the downlink grant information, wherein
when less than the first multiplex number, and equal to or more than a second multiplex number, the second multiplex number being less than the first multiplex number, of user devices that receive periodically generated periodic data as the data signal exist, and user devices that receive non-periodically generated non-periodic data as the data signal exist, the scheduling unit generates the downlink grant information indicating that the downlink radio resources are to be allocated to the second multiplex number of user devices that receive the periodic data and the user devices that receive the non-periodic data.

2. The base station as claimed in claim 1,
wherein
when more than the second multiplex number of user devices that send the periodic data exist, and a third number of user devices that send the non-periodic data exist, and when the radio resources are remaining available to be allocated after the radio resources are allocated to the second multiplex number of user devices and the third multiplex number of user devices, the scheduling unit generates the downlink grant information indicating that the downlink radio resources are to be allocated to more than the second multiplex number of user devices that send the periodic data and the third multiplex number of user devices that send the non-periodic data.

3. The base station as claimed in claim 1, further comprising:
a user multiplex number control unit configured to control the second multiplex number.

4. The base station as claimed in claim 1, wherein the periodic data is voice data.

5. A resource allocation method in a mobile communication system, comprising:
a step of generating downlink grant information indicating that downlink radio resources are to be allocated to equal to or less than a first multiplex number of user devices; and
a step of transmitting a control signal containing the downlink grant information and a data signal mapped to the radio resources specified by the downlink grant information, wherein
when less than the first multiplex number, and equal to or more than a second multiplex number, the second multiplex number being less than the first multiplex number, of user devices that receive periodically generated periodic data as the data signal exist, and user devices that receive non-periodically generated non-periodic data as a data signal exist, in the step of generating downlink grant information, the downlink grant information, indicating that the downlink radio resources are to be allocated to the second multiplex number of user devices that receive the periodic data and the user devices that receive the non-periodic data, is generated.
